# DEMANDE DE BREVET EUROPEEN

(11) **EP 2 722 538 A1**
(43) Date de publication de la demande: **23.04.2014**
(21) Numéro de dépôt: 13306425.3
(22) Date de dépôt: 17.10.2013
(51) Int. Cl.: F16C 7/02, F16C 11/04

(54) **Procédé de détensionnement des contraintes d'un embout goupillé, embout détensionné obtenu**

(30) Priorité: 18.10.2012 FR 1259922
(71) Demandeur: Epsilon Composite, 33340 Gaillan en Medoc (FR)
(72) Inventeur: Carrere, Noël, 33611 Cestas Cedex (FR); Nogues, Dominique, 33990 Hourtin (FR)
(74) Mandataire: Fantin, Laurent

(57) **Abrégé**

L'objet de l'invention est un procédé de détensionnement des contraintes dans un embout (14) rapporté sur un corps (12) sous forme d'une pièce longitudinale telle qu'un tube, ledit embout comprenant une chape (18) avec deux ailes (18-1, 18-2) munies chacune d'un alésage (20-1, 20-2) destiné à coopérer avec une goupille (24), caractérisé en ce que l'on réalise un enlèvement de matière en amont de chacun desdits alésages (20-1, 20-2).

## Description

La présente invention concerne un procédé de détensionnement d'un embout goupillé, notamment d'une pièce longitudinale telle qu'un tube, plus particulièrement d'une bielle dans une structure d'un ouvrage statique, d'une charpente, d'un aéronef ou d'un navire.

L'invention couvre aussi l'embout détensionné ainsi obtenu.

Dans toute structure, des éléments unitaires tirant et/ou poussant, tels que des bielles ou des tendeurs, sont conçus pour reprendre des efforts importants avec un maximum de sécurité et un minimum de poids.

Par exemple, dans l'aéronautique et plus particulièrement dans la construction d'aéronefs, il est nécessaire de reprendre des efforts et la structure est conçue pour cela.

La liaison entre les ailes et le fuselage notamment est une zone dans laquelle la reprise des efforts est particulièrement complexe.

A cet effet, il est prévu un maillage de tirants, dits aussi bielles, qui sont soumis à des efforts de compression, de traction, voire de flambage, ceci de façon alternée et avec des cycles extrêmement nombreux.

Ces bielles sont liées aux autres éléments de la structure par des montages à chape et goupille.

On comprend dès lors que la liaison à goupille est soumise à ces mêmes cycles. Ces pièces sont soumises à des efforts importants, à des sollicitations variées et il s'agit là d'un très bon exemple pour illustrer la présente invention. Cette application est fortement illustrative mais en aucun cas limitative.

Dans l'aéronautique, la chasse au poids est réellement une constante car le poids engendre une surconsommation de combustible ou une perte de charge utile pour une même consommation, ce qui est pénalisant dans tous les cas. De plus, les avionneurs cherchent aussi à améliorer les performances relatives à la résistance mécanique pour un même poids voire pour un poids réduit.

Aussi, les bielles peuvent être réalisées en matériaux présentant le meilleur rapport masse/résistance comme les matériaux composites, et plus particulièrement ceux à base de fibres de carbone.

De plus, en utilisant une résine adaptée, en recourant au procédé de fabrication par pultrusion, en ajustant les orientations des fibres et avec un savoir-faire de fabrication élaboré, le corps des bielles réalisées présente des caractéristiques mécaniques extrêmement élevées avec un poids extrêmement réduit.

La fabrication de la "partie tubulaire" d'une bielle est industrialisée et le produit obtenu est adapté aux conditions aéronautiques.

Au niveau de la liaison de ces produits tubulaires avec la structure, il est retenu la présence d'une chape ménagée aux extrémités de ladite partie tubulaire, comme indiqué précédemment.

L'embout rapporté sur le corps de bielle est réalisé par ailleurs, à partir d'un alliage métallique léger tel que du titane ou de l'aluminium, par moulage et/ou usinage. La chape est venue de fabrication avec le corps de l'embout, lui-même destiné à être emboîté et lié au corps de bielle. La liaison est préférentiellement du type collage mais peut aussi être obtenue par vissage, rivetage, soudage, goupillage, ou boulonnage ou tout autre procédé connu.

Les ailes de la chape portent chacune un alésage de façon à recevoir la goupille de liaison.

Une bague peut être interposée entre les parois internes de l'alésage et la goupille, ladite bague étant montée par frettage par exemple pour l'immobiliser dans l'alésage mais le procédé reste inchangé et trouve application.

Durant le fonctionnement au cours duquel la goupille et la chape sont soumises à des efforts importants, ces alésages, du fait du montage avec goupille, sont soumis à des concentrations de contraintes sur des zones très limitées des portées autour de l'axe et les alternances des efforts de traction et de compression conduisent à une fatigue prématurée.

Cette concentration de contraintes à proximité immédiate des alésages est préjudiciable à la qualité du montage mécanique et à la résistance mécanique de l'ensemble, notamment à sa résistance en fatigue et à sa résistance statique à la traction.

Cette concentration localisée de contraintes peut rapidement conduire à des amorces de criques et donc à terme à la rupture.

Du fait des règles de sécurité très exigeantes que l'on peut rencontrer dans les ouvrages d'art, les bâtiments, les engins mobiles ou dans le domaine aéronautique, de tels éléments, intégrés dans la structure, sont des pièces vitales étroitement surveillés.

Dans le cas d'une détection de telles dégradations, l'élément est changé, ce qui occasionne pour le moins des frais élevés de maintenance mais dans le cas d'une surveillance approximative, le risque de rupture n'est pas exclu.

Aussi, la présente invention a pour but de pallier ce problème d'amorce de criques par concentration de contraintes dans une pièce soumise à des sollicitations répétées en traction/compression dans une liaison chape/goupille, notamment à limiter les concentrations de contraintes à proximité immédiate des alésages des ailes des chapes.

La présente invention est maintenant décrite en application à des bielles de structure d'un aéronef, sans que cet exemple soit, d'une quelconque manière, limitatif.

Le mode préféré de réalisation en fonction des types de fabrication est illustratif et des dessins sont annexés pour expliciter cette description, les figures de ces dessins représentant :
- Figure 1 : une vue en perspective d'une extrémité d'une bielle aéronautique avec un embout rapporté, à montage par goupille, selon l' invention,
- Figure 2 : une vue en élévation latérale d'une bielle de l'art antérieur, avec une représentation schématique des amorces de criques,
- Figure 3 : une première vue en élévation latérale de la bielle de la figure 1,
- Figure 4 : une seconde vue en coupe de la bielle de la figure 3, suivant la ligne en trait discontinu.

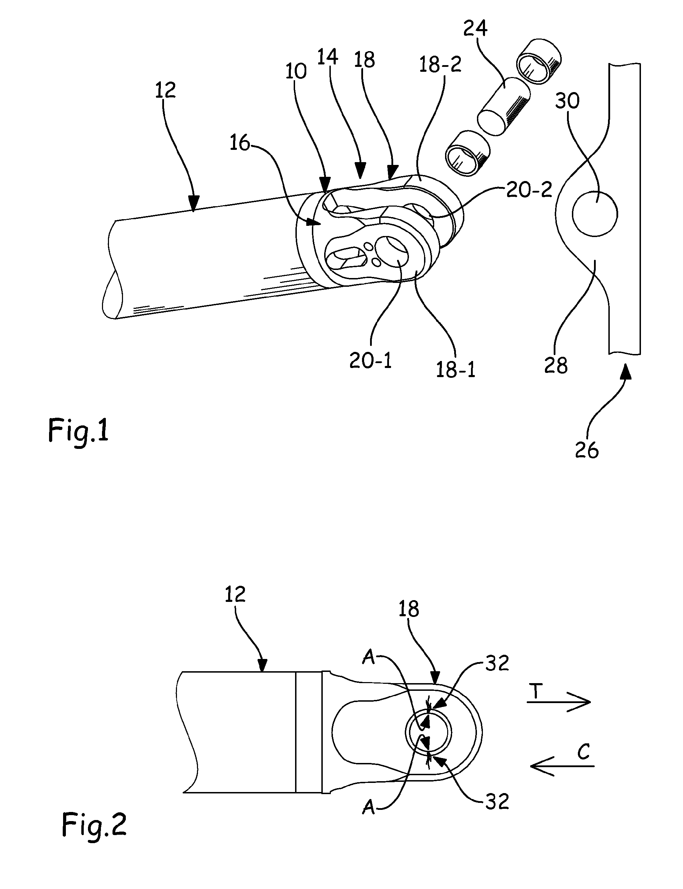

Sur la figure 1, on a représenté partiellement un corps tubulaire en l'occurrence une bielle 10 aéronautique constituée d'un corps 12 de bielle et de deux embouts 14 rapportés aux extrémités dudit corps 12.

Le corps tubulaire 12 de la bielle est réalisé en matériaux légers et très résistants par exemple en matériaux composites, notamment à partir de fibres de carbone à haut module et de résine époxy, avec un procédé de fabrication par pultrusion permettant d'obtenir un corps de bielle de grande précision et avec des caractéristiques mécaniques élevées.

L'embout 14 est, dans ce mode de réalisation, en matériau métallique du type alliage léger comme l'aluminium. Cet embout 14 comprend un corps 16 d'embout de forme conjuguée de celle de l'extrémité du corps 12 de bielle, en l'occurrence de section circulaire.

A l'extrémité opposée, l'embout 14 porte une chape 18 avec deux ailes 18-1, 18-2 munies chacune d'un alésage 20-1, 20-2 destiné à recevoir une goupille 24 ainsi que cela sera expliqué ultérieurement.

L'extrémité libre du corps 12 de bielle reçoit l'embout 14 par emboîtement et collage, cette liaison ne faisant pas partie de la présente invention.

La bielle est ainsi conçue pour être reliée à une structure 26 munie d'une oreille 28 portant un alésage 30 destiné à recevoir également la même goupille 24 ci-avant mentionnée. Ladite oreille vient se loger entre les deux ailes de la chape. Sur la figure 2 d'une bielle de l'art antérieur, on constate que lorsque la bielle est soumise à des efforts de traction T et des efforts de compression C, il se produit une concentration de contraintes à partir de la surface intérieure de l'alésage pour le moins et une apparition de criques 32 ou du moins une apparition d'amorces de criques.

Mécaniquement, la présence des alésages 20-1, 20-2 dans les ailes 18-1, 18-2 d'une chape 18 provoque un phénomène de concentration de contraintes en bordure du trou et à la surface interne de l'alésage, alors que les contraintes au coeur de la matière des ailes 18-1, 18-2 et surtout dans leur partie la plus éloignée des alésages 20-1, 20-2 sont bien plus faibles.

Cette répartition non homogène provoque donc des pics de concentration de contraintes, préjudiciables à la durée de vie en fatigue, la matière autour de la zone la moins sollicitée étant alors moins contrainte et donc sous employée.

La zone d'extrémité de l'aile peut sembler faiblement soumise à des contraintes, ce qui est faux car elle assure un pontage entre les branches de chaque aile et ce pontage est essentiel pour ne pas concentrer les efforts en tête de chape. On considère donc pour la suite de la description que l'extrémité assurant le pontage entre les branches de chaque aile est dimensionnée de façon suffisante pour constituer une liaison assimilable à un encastrement.

Si l'on considère la représentation des contraintes lors des efforts de traction, qui sollicitent le plus les zones en périphérie de l'alésage, on note qu'elles se concentrent sur la zone A, sur chacune des branches, voir figure 2.

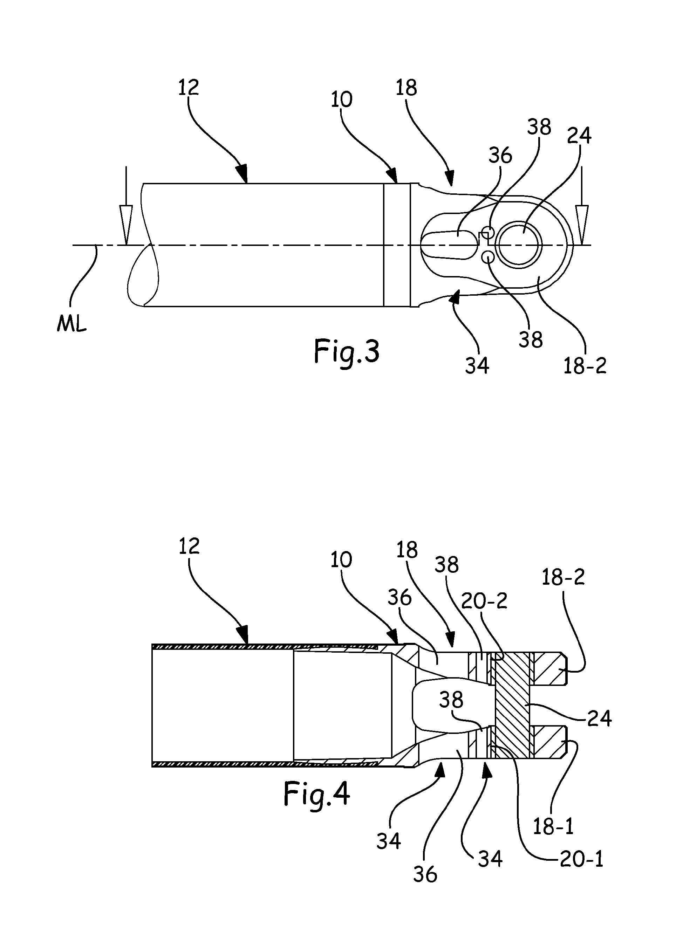

Cette concentration de contraintes, fortement localisée, est la source d'amorces de criques 32 et on constate que, lorsqu'il se produit une rupture sous charge de rupture, la ligne de rupture se propage perpendiculairement aux branches à partir des zones A, dans la direction des criques représentées sur la figure 2. Le procédé selon la présente invention consiste donc à provoquer un détensionnement des contraintes localisées afin de mieux les répartir et de solliciter la matière environnant l'alésage de façon élargie, voir figures 3 et 4. Ce procédé consiste à réaliser un enlèvement de matière 34 en amont de l'alésage de chaque aile 18-1, 18-2 de la chape.

En l'occurrence, l'enlèvement de matière 34 consiste à réaliser au moins une lumière 36 suivant l'axe médian longitudinal ML de ladite aile, en amont de l'alésage. De préférence, cette au moins une lumière 36 est de forme sensiblement circulaire ou oblongue.

Cette au moins une lumière 36 doit être ménagée à proximité de l'alésage car plus elle est proche de l'alésage 20 et meilleure est la répartition des contraintes à la traction.

On note alors un détensionnement des contraintes lorsque l'embout subit des efforts de traction.

Il est alors rappelé que ladite chape 18 est également soumise à des efforts de compression si bien qu'il est nécessaire de disposer de suffisamment de matière entre l'alésage 20 de la chape et ladite lumière 36 pour résister à ces efforts de compression. Ceci est aisément déterminable par l'homme de l'art notamment par le calcul.

On obtient donc une diminution des contraintes maximales par canalisation des contraintes grâce à la présence de cette lumière.

Néanmoins, les calculs et les essais montrent que si on éloigne la au moins une lumière 36 de l'alésage 20 pour obtenir un pont suffisant à la résistance en compression, le pont entre cette lumière et cet alésage constitue une liaison rigide encore trop importante pour que les contraintes dans l'alésage ne soient pas suffisamment détensionnées et réparties.

Selon le procédé de la présente invention, dans le cas où les efforts sont de type alterné, traction/compression, on ménage deux orifices 38 supplémentaires entre l'alésage 20 et la lumière 36 oblongue, positionnés de façon décalée par rapport à l'axe médian longitudinal ML de l'aile, de part et d'autre de cet axe. Ces orifices 38 supplémentaires sont disposés en amont de l'alésage 20 et en aval de la lumière 36.

Suivant des essais menés et les calculs réalisés sur un produit à industrialiser, incluant non seulement les contraintes en fatigue mais les phénomènes de fretting, on peut noter que la contrainte maximum dans la zone critique en fatigue a diminué d'une valeur de 177 MPa à 165 MPa.

Si cette diminution peut paraître faible, elle se traduit par une augmentation très importante du nombre de cycles de vie : grâce au procédé selon la présente invention, on passe de 650 000 cycles à 10⁶ cycles soit près de 54 % d'augmentation.

Si on applique des coefficients correcteurs du fait de traitements de surface réalisés sur les surfaces internes des alésages 20 et sur la surface périphérique de la goupille 24, on peut estimer la correction à + 17%, on obtient les valeurs maximales de contrainte de cisaillement à 207 MPa et la présence de la lumière et des orifices diminue la contrainte maximale à 195 MPa, cette diminution conduisant à un gain en terme de durée de vie de 35%, passant de 340 000 cycles à 460 000 cycles.

Si on interpose une bague dans l'alésage 20, même si la bague reporte les contraintes sur une plus grande surface, le frettage de cette bague engendre une superposition d'environ 30 MPa supplémentaires de contraintes en traction simple.

Dans ce cas, en mettant en oeuvre le procédé selon la présente invention, le maximum de contrainte passe de 237 MPa à 225 MPa, ce qui représente un gain de 31% en terme de durée de vie, le nombre de cycles passant de 175 000 à 230 000.

On constate donc que la présence de la lumière oblongue et des orifices permettent pour le moins un gain en terme de durée de vie de 31%, ce qui est considérable pour de la maintenance aéronautique puisque c'est le domaine d'application retenu.

L'invention couvre aussi l'embout 14 obtenu par la mise en oeuvre du procédé qui vient d'être décrit, rapporté sur un corps 12 de bielle, ledit embout 14 comprenant une chape 18 avec deux ailes 18-1, 18-2 munies chacune d'un alésage 20-1, 20-2 destiné à coopérer avec une goupille 24, et comprenant un enlèvement 34 de matière en amont de chaque alésage 20.

De préférence, l'embout 14 est métallique.

La présente invention trouve donc un intérêt majeur dans cette application aéronautique particulière qui présente de nombreuses contraintes spécifiques, mais le procédé peut s'appliquer à tout domaine où des tirants avec embouts rapportés ou venus de fabrication sont fortement sollicités.

On note aussi que, même si ce n'est pas l'objectif principal recherché dans la présente invention, l'aménagement des lumières et orifices permettent un gain de poids, toujours appréciable en aéronautique.

Ainsi l'invention permet non seulement un gain appréciable de résistance de l'ordre de 5 à 10 %, un gain de durée de vie de l'ordre de 31 à 54 % mais également un gain du rapport masse/résistance ou masse/durée de vie très conséquent.

De tels embouts à chape montés avec une goupille peuvent trouver application dans de nombreux domaines afin de détensionner les contraintes fortement localisées.

## Revendications

1. Procédé de détensionnement des contraintes dans un embout (14) rapporté sur un corps (12) sous forme d'une pièce longitudinale telle qu'un tube, ledit embout comprenant une chape (18) avec deux ailes (18-1, 18-2) munies chacune d'un alésage (20-1, 20-2) destiné à coopérer avec une goupille (24), **caractérisé en ce que** l'on réalise un enlèvement (34) de matière en amont de chacun desdits alésages (20-1, 20-2).

2. Procédé de détensionnement des contraintes dans un embout (14) rapporté sur un corps (12) selon la revendication 1, **caractérisé en ce que** l'on réalise, à titre d'enlèvement (34) de matière, au moins une lumière (36).

3. Procédé de détensionnement des contraintes dans un embout (14) rapporté sur un corps (12) selon la revendication 2, **caractérisé en ce que** l'on réalise, à titre d'enlèvement (34) de matière, au moins une lumière (36) de forme sensiblement oblongue.

4. Procédé de détensionnement des contraintes dans un embout (14) rapporté sur un corps (12) selon la revendication 2 ou 3, **caractérisé en ce que** la lumière (36) est réalisée suivant l'axe médian longitudinal (ML) de ladite aile.

5. Procédé de détensionnement des contraintes dans un embout (14) rapporté sur un corps (12) selon l'une des revendications 2 à 4, **caractérisé en ce que** l'on réalise, à titre d'enlèvement de matière, en plus de la au moins une lumière (36), des orifices (38) interposés en amont de l'alésage (20) et en aval de ladite au moins une lumière (36).

6. Procédé de détensionnement des contraintes dans un embout (14) rapporté sur un corps (12) selon la revendication 5, **caractérisé en ce que** les deux orifices (38) supplémentaires ménagés entre l'alésage (20) et la lumière (36) sont positionnés de façon décalée par rapport à l'axe médian longitudinal (ML) de l'aile, de part et d'autre de cet axe.

7. Embout (14) de bielle (10) aéronautique, rapporté sur un corps (12) de bielle, ledit embout comprenant une chape (18) avec deux ailes (18-1, 18-2) munies chacune d'un alésage (20-1, 20-2) destiné à coopérer avec une goupille (24), **caractérisé en ce qu'il** comprend un enlèvement (34) de matière en amont de chaque alésage (20).

8. Embout (14) de bielle (10) aéronautique selon la revendication 7, **caractérisé en ce que** l'embout (14) est métallique.
